(19) Europäisches Patentamt
European Patent Office
Office européen des brevets

(11) Veröffentlichungsnummer: **0 185 620**
**A2**

(12) # EUROPÄISCHE PATENTANMELDUNG

(21) Anmeldenummer: 85810600.8

(22) Anmeldetag: 16.12.85

(51) Int. Cl.[4]: C 09 B 29/01
D 06 P 1/18

(30) Priorität: 20.12.84 CH 6055/84

(43) Veröffentlichungstag der Anmeldung: 25.06.86 Patentblatt 86/26

(84) Benannte Vertragsstaaten: BE CH DE FR GB IT LI NL

(71) Anmelder: CIBA-GEIGY AG
Klybeckstrasse 141
CH-4002 Basel(CH)

(72) Erfinder: Liechti, Peter, Dr.
Alte Olsbergerstrasse 17
CH-4422 Arisdorf(CH)

(54) **Monoazoverbindungen.**

(57) Es werden Monazoverbindungen der Formel

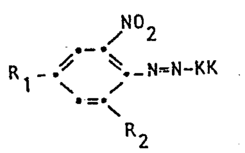

(1)

worin einer der beiden Substituenten $R_1$ oder $R_2$ oder beide Substituenten $C_3-C_8$–Alkyl oder eine Gruppe der Formel

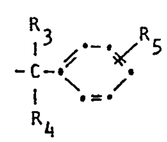

(1a)

worin $R_3$ und $R_4$ unabhängig voneinander für Wasserstoff oder $C_1-C_4$–Alkyl und R5 für Wasserstoff, Halogen oder C C4–Alkyl stehen, und der andere der beiden Substituenten $R_1$ oder $R_2$, wenn nicht beide $C_3-C_8$–Alkyl oder eine Gruppe der Formel (1a) bedeuten, Wasserstoff, Halogen oder $C_1-C_4$–Alkyl und KK den Rest einer von wasserlöslich machenden Gruppen freien Kupplungskomponente bedeuten, beschrieben. Diese Verbindungen können als Farbstoffe zum Färben oder Bedrucken von z.B. Polyesterfasermaterialien verwendet werden.

EP 0 185 620 A2

CIBA-GEIGY AG
Basel (Schweiz)

1-15199/+

Monoazoverbindungen

Die vorliegende Erfindung betrifft neue Monoazoverbindungen, Verfahren zu deren Herstellung sowie deren Verwendung als Farbstoffe zum Färben und Bedrucken von halbsynthetischem oder synthetischem hydrophobem Fasermaterial, insbesondere aus Polyester.

Die neuen Monoazoverbindungen entsprechen der Formel

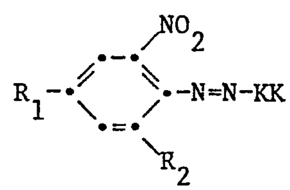 , (1)

worin einer der beiden Substituenten $R_1$ oder $R_2$ oder beide Substituenten $C_3$-$C_8$-Alkyl oder eine Gruppe der Formel

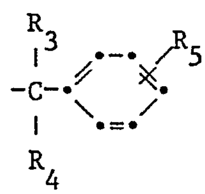 , (1a)

worin $R_3$ und $R_4$ unabhängig voneinander für Wasserstoff oder $C_1$-$C_4$-Alkyl und $R_5$ für Wasserstoff, Halogen oder $C_1$-$C_4$-Alkyl stehen, und der andere der beiden Substituenten $R_1$ und $R_2$, wenn nicht beide $C_3$-$C_8$-Alkyl oder eine Gruppe der Formel (1a) bedeuten, Wasserstoff, Halogen oder $C_1$-$C_4$-Alkyl und KK den Rest einer von wasserlöslich machenden Gruppen freien Kupplungskomponente bedeuten.

Von den Substituenten $R_1$ und $R_2$ kann einer oder beide $C_3$-$C_8$-Alkyl oder eine Gruppe der Formel (1a) bedeuten. Bevorzugt steht jedoch nur einer der beiden Substituenten $R_1$ und $R_2$ für $C_3$-$C_8$-Alkyl oder eine

Gruppe der Formel (1a). In diesem Fall bedeutet der andere Substituent Wasserstoff, Halogen oder $C_1$-$C_4$-Alkyl.

Der $C_3$-$C_8$-Alkylrest $R_1$ bzw. $R_2$ kann geradkettig oder verzweigt sein, wobei die verzweigten Reste bevorzugt sind. Er hat vorzugsweise 4 - 8 C-Atome. Als Beispiele seien genannt: t-Butyl, Isopropyl, 2-Aethylhexyl, t-Octyl und i-Pentyl.

Halogen bedeutet in der genannten Beschreibung vorzugsweise Chlor, Fluor oder Brom, insbesondere Chlor, sofern nichts anderes angegeben ist.

In praktisch wichtigen Verbindungen der Formel 1 bedeutet $R_1$ $C_3$-$C_8$-Alkyl oder eine Gruppe der Formel (1a) und $R_2$ Wasserstoff, Halogen oder $C_1$-$C_4$-Alkyl, vorzugsweise Wasserstoff.

$R_1$ und/oder $R_2$ bedeuten insbesondere eine Gruppe der Formel 1a, vorzugsweise jedoch nur eine der beiden Gruppen. $R_1$ in der Bedeutung einer Gruppe der Formel (1a) ist bevorzugt. In diesem Fall steht $R_2$ für Wasserstoff, Halogen oder $C_1$-$C_4$-Alkyl, vorzugsweise für Wasserstoff.

In bevorzugten Verbindungen der Formel (1) ist mindestens einer der beiden Substituenten $R_3$ und $R_4$ von Wasserstoff verschieden. Insbesondere sind jene Verbindungen zu erwähnen, in denen $R_3$ oder $R_4$ oder $R_3$ und $R_4$ Methyl bedeuten.

$R_5$ steht vorzugsweise für Wasserstoff, Chlor oder Methyl, insbesondere für Wasserstoff.

Als Kupplungskomponente KK kommen alle in der Azochemie üblichen und aus der einschlägigen Literatur bekannten Kupplungskomponenten in Frage, sofern sie keine wasserlöslich machenden Gruppen, also keine ionischen Gruppen, z.B. keine Sulfo-, Carboxyl- oder quartären

Ammoniumgruppen, enthalten (Kupplungskomponenten für Dispersions-Azofarbstoffe).

Aus der Vielzahl der Möglichkeiten seien beispielsweise erwähnt: Kupplungskomponenten der Benzolreihe, der Naphthalinreihe, der offenkettigen methylenaktiven Verbindungen (wie z.B. der Acylacetarylamide) sowie der heterocyclischen Reihe. Die heterocyclischen Kupplungskomponenten sind bevorzugt.

Beispiele für die genannten Reste von Kupplungskomponenten KK sind Reste aus der Reihe der Acylacetarylamide, Phenole, Pyridone, Chinoline, Pyrazole, Indole, Diphenylamine, Aniline, Aminopyridine, Pyrimidine, Pyrimidone, Naphthole, Naphthylamine, Aminothiazole, Thiophene oder Hydroxypyridine.

Besonders zu erwähnende Reste KK sind solche aus der Reihe der Acetoacetanilide, Phenole, Aniline, Diphenylamine, Naphthylamine, Naphthole, Indole, Chinoline, Pyridone, Pyrazole, Chinoline, Chinolone, Aminopyridine, insbesondere 2,6-Diaminopyridine, wobei die genannten heterocyclischen KK bevorzugt sind, insbesondere jene aus der Reihe der Pyridone.

Beispiele für Reste KK aus der Anilin- und Diphenylaminreihe sind solche der Formeln

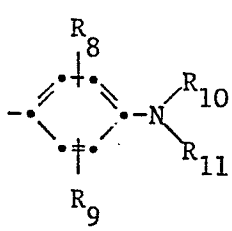

oder

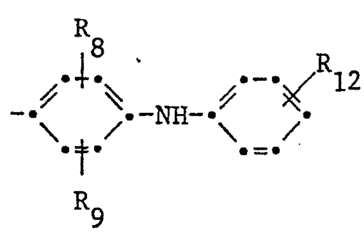

,

(2) (3)

worin

$R_8$ Wasserstoff, $C_1$-$C_4$-Alkyl, OH, $C_1$-$C_4$-Alkoxy, Halogen oder Acylamino (z.B. Alkanoylamino, Benzoylamino, Alkylsulfonyl, Phenylsulfonyl),

$R_9$ Wasserstoff, $C_1$-$C_4$-Alkyl, Halogen, OH, $C_1$-$C_4$-Alkoxy oder Amino, oder $R_8$ und $R_9$ zusammen die Ergänzung zu einem ankondensierten Benzo- oder Tetrahydrobenzorest,

$R_{10}$ und $R_{11}$ unabhängig voneinander Wasserstoff, $C_1$-$C_8$-Alkyl, Alkenyl, Cycloalkyl, Aryl, Benzyl, Phenäthyl, $C_1$-$C_4$-Hydroxyalkyl, $C_1$-$C_5$-Cyanoalkyl oder $C_1$-$C_4$-Halogenalkyl, oder $R_{10}$ und $R_{11}$ zusammen mit dem N-Atom die Ergänzung zu einem Morpholin-, Piperidin- oder Piperazinrest, oder $R_{10}$ gemeinsam mit $R_9$ in ortho-Stellung zur Aminogruppe die Ergänzung zu einem ankondensierten 5- oder 6-gliedrigen N-Heterocyclus (wodurch mit dem Benzolring z.B. ein Indolin- oder Tetrahydrochinolinring entsteht), und

$R_{12}$ Wasserstoff, $C_1$-$C_4$-Alkyl, Halogen, Nitro oder $C_1$-$C_4$-Alkoxy bedeuten. $R_9$ steht dabei vorzugsweise in 3-Stellung zur Aminogruppe und ist insbesondere Wasserstoff oder Acylamino, z.B. $C_1$-$C_5$-Alkanoylamino.

Beispiele für Reste KK aus der Diaminopyridinreihe sind solche der Formel

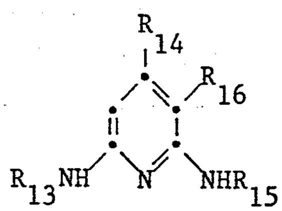

, (4)

worin bedeuten: $R_{16}$ Wasserstoff, CN, $C_1$-$C_4$-Alkyl, $NO_2$, Halogen; $R_{13}$ und $R_{15}$ Wasserstoff, gegebenenfalls substituiertes Alkyl, Alkenyl, Cyclohexyl, Aryl, Benzyl, Phenäthyl (beispielsweise einer der Reste $R_{13}$ und $R_{15}$ Wasserstoff oder gegebenenfalls durch Cl, $CH_3$, $C_2H_5$, tert.-Butyl, Phenoxy, Methoxy, Aethoxy, Propoxy oder Butoxy ein- oder mehrfach substituiertes Phenyl und der andere der Reste $R_{13}$ und $R_{15}$ Wasserstoff, gegebenenfalls durch $C_1$-$C_4$-Alkoxy oder Phenyl substituiertes $C_1$-$C_6$-Alkyl, Allyl, Cyclopentyl, Cyclohexyl, Methylcyclohexyl,

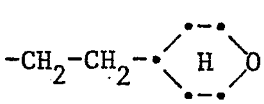 oder 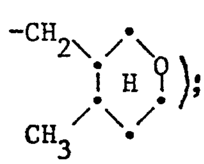); und $R_{14}$ Wasserstoff, $CH_3$,

$C_2H_5$ oder $C_3H_7$;

oder solche der Formeln

(5) 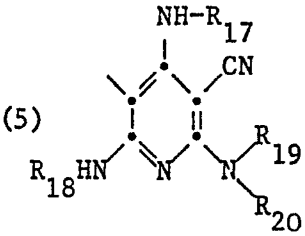 bzw. 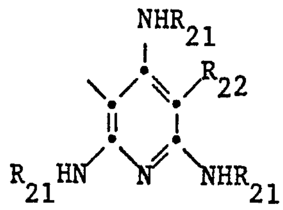 (6)

worin bedeuten:

$R_{17}$ und $R_{18}$ eine gegebenenfalls durch $C_1$-$C_8$-Alkoxy substituierte $C_1$-$C_8$-Alkylgruppe, oder Wasserstoff,

$R_{19}$ und $R_{20}$ jeweils Wasserstoff, eine $C_1$-$C_8$-Alkylgruppe, die durch Hydroxy, Amino, $C_1$-$C_8$-Alkoxy oder $NT_1T_2$ substituiert sein kann, eine gegebenenfalls durch Methylreste substituierte Cycloalkylgruppe, eine gegebenenfalls durch 1 bis 3 Chlor, $C_1$-$C_4$-Alkyl oder $C_1$-$C_4$-Alkoxy substituierte Benzylgruppe, oder $R_{19}$ und $R_{20}$ die Ergänzung zu einem, vorzugsweise gesättigten, 5- oder 6-gliedrigen heterocyclischen Ring, der gegebenenfalls noch ein weiteres Heteroatom als Ringglied enthalten kann, insbesondere die Ergänzung zu einem Pyrrolidin-, Piperidin-, Piperazin- oder Morpholinring,

$T_1$ und $T_2$ je $C_1$-$C_8$-Alkyl,

$R_{21}$ H, $C_1$-$C_4$-Alkyl, Alkenyl, Cyclohexyl, Aryl, Benzyl und

$R_{22}$ CN, COOH, COOAlkyl, COOCyclohexyl, COOAryl, COOBenzyl, Alkyl($C_1$-$C_4$), $NO_2$, Halogen, $SO_2$-Alkyl($C_1$-$C_4$).

Beispiele für Reste KK aus der Pyrazolinreihe sind solche der Formel

(7) 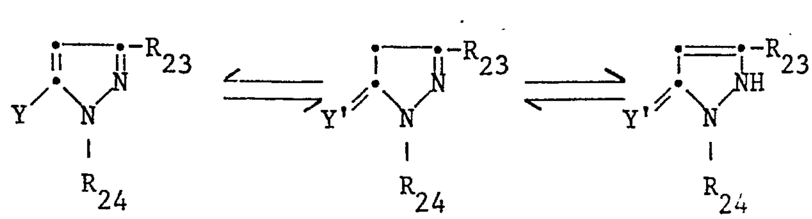

worin bedeuten: Y OH oder $NH_2$, Y' O oder NH,

$R_{24}$ H, $C_1$-$C_4$-Alkyl, Alkenyl, Cyclohexyl, Aryl, Benzyl oder Phenyläthyl, und

$R_{23} = R_{24}$ oder $COOR_{24}$ oder $CONHR_{24}$.

Beispiele für Reste KK aus der Pyridonreihe sind solche der Formel

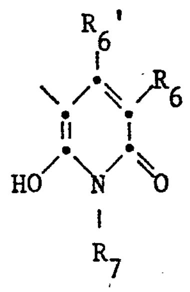

(8) ,

worin $R_6$ Alkyl, CN, $CONH_2$ oder $SO_2NH_2$, $R_6'$ Alkyl und $R_7$ Wasserstoff, Alkenyl, Aryl oder vorzugsweise gegebenenfalls substituiertes $C_1$-$C_8$-Alkyl bedeuten.

Beispiele für offenkettige methylenaktive Verbindungen als Reste KK sind folgende:

a) Ester und Amide der Acetessigsäure:
Solche Ester und Amide lassen sich leicht durch Umsetzung von OH- und NH-haltigen Verbindungen mit Diketen herstellen, wie es beispielsweise in Houben-Weyl, Methoden der organischen Chemie, Vol.7, Teil 4, Sauerstoffverbindungen II, beschrieben ist. Derartige Kupplungskomponenten entsprechen zum Beispiel der Formel

$$Z\text{-}CH_2\text{-}CO\text{-}CH_2\text{-}CO\text{-}R_{25} \qquad (9)$$

Darin bedeutet $R_{25}$ gegebenenfalls substituiertes Alkoxy mit 1-8 Kohlenstoffatomen oder Cycloalkoxy, gegebenenfalls substituiertes Benzyloxy oder Phenoxy, das gegebenenfalls durch $C_1$-$C_4$-Alkyl, $C_1$-$C_4$-Alkoxy, Halogen, Acylamino, Carbonamido, Sulfonamido, Dialkylamino, $C_1$-$C_4$-Alkylcarbonyl, $C_1$-$C_4$-Alkoxycarbonyl, OH oder Phenyl substituiert sein kann.

$R_{25}$ bedeutet weiterhin einen Rest der Formel

$-\underset{R_{26}}{N}-R_{27}$, wobei

$R_{26}$ $C_1$-$C_4$-Alkyl oder vorzugsweise Wasserstoff und

$R_{27}$ Wasserstoff, gegebenenfalls substituiertes (z.B. durch Halogen, OH, Alkoxy, Amino) $C_1$-$C_8$-Alkyl oder Cycloalkyl, oder gegebenenfalls substituiertes Benzyl oder einen Phenylrest der Formel

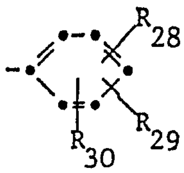 bedeutet.

$R_{28}$ ist dabei Wasserstoff, $C_1$-$C_4$-Alkyl, $C_1$-$C_4$-Alkoxy, Halogen, Cyano, Nitro, OH, Dialkylamino, Phenylamino, 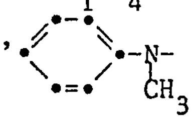 , Phenyl, Acylamino, gegebenenfalls substituiertes Carbonamido, gegebenenfalls substituiertes Sulfonamido, $C_1$-$C_4$-Alkylcarbonyl, $C_1$-$C_4$-Alkoxycarbonyl oder $C_1$-$C_4$-Alkylsulfonyl.

$R_{29}$ ist unabhängig von $R_{28}$ Wasserstoff, $C_1$-$C_4$-Alkyl, $C_1$-$C_4$-Alkoxy oder Halogen;

$R_{30}$ ist unabhängig von $R_{28}$ und $R_{29}$ Wasserstoff, Halogen oder $C_1$-$C_4$-Alkyl.

$R_{27}$ kann weiterhin zusammen mit $R_{26}$ und gegebenenfalls unter Einschluss weiterer Heteroatome einen 5- oder 6-gliedrigen gesättigten oder ungesättigten Ring bilden, beispielsweise der Formel

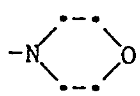 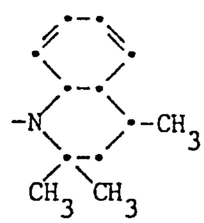 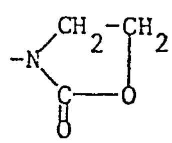 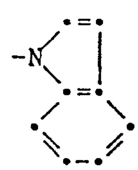 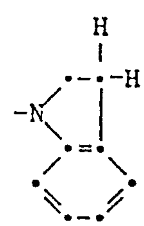 ;

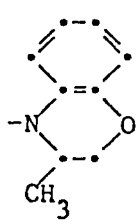 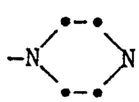 oder 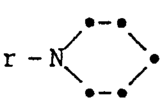 .

$R_{25}$ hat weiterhin auch die Bedeutung einer heterocyclisch substituierten Aminogruppe, beispielsweise der Formel

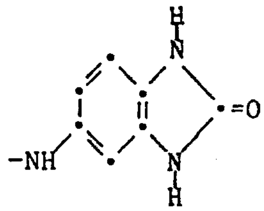 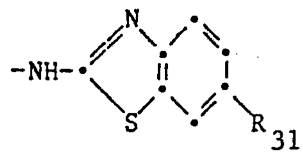 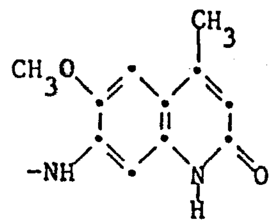

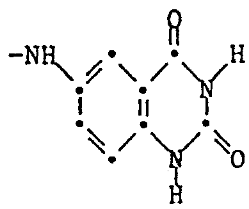 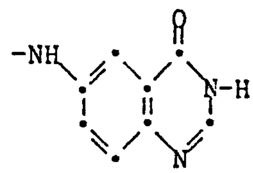 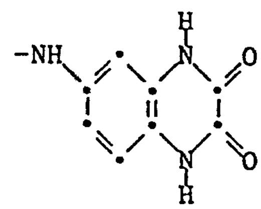

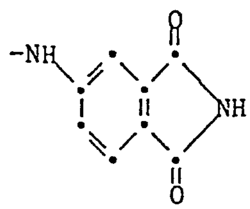 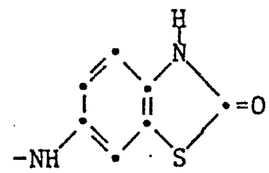 oder 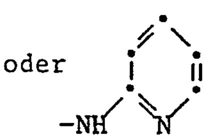 ,

wobei $R_{31}$ Methyl, Aethyl, Methoxy, Aethoxy oder vorzugsweise Wasserstoff oder Acetylamino bedeuten.

$R_{25}$ bedeutet weiterhin einen Rest der Formel

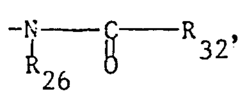 , 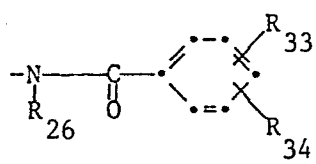 , 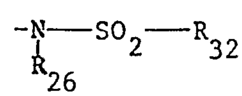 oder

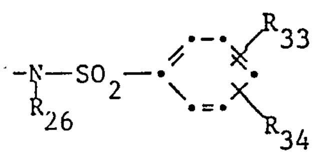 ,

wobei $R_{26}$ die oben angegebene Bedeutung hat und

$R_{32}$ gegebenenfalls substituiertes Alkyl mit 1-8 Kohlenstoffatomen, Cycloalkyl, Amino, Alkylamino, Dialkylamino, Phenylamino, Alkoxy oder Phenoxy und

$R_{33}$ und $R_{34}$ unabhängig voneinander Wasserstoff, $C_1$-$C_4$-Alkyl, $C_1$-$C_4$-Alkoxy, Halogen oder Dialkylamino bedeuten.

Z bedeutet Halogen oder vorzugsweise Wasserstoff oder eine aliphatische oder aromatische, gegebenenfalls substituierte Aminogruppe.

b) Ester und Amide der Malonsäure als Kupplungskomponenten entsprechen z.B. der Formel

$$R_{25}-\underset{O}{\underset{\|}{C}}-CH_2-\underset{O}{\underset{\|}{C}}-R_{25}$$

wobei $R_{25}$ die oben angegebene Bedeutung hat.

c) Ester und Amide der Cyanessigsäure als Kupplungskomponenten entsprechen z.B. der Formel $NC-CH_2-\underset{O}{\underset{\|}{C}}-R_{25}$, wobei $R_{25}$ die oben angegebene Bedeutung hat.

Bevorzugte Reste von offenkettigen Kupplungskomponenten sind jene der Acylacetarylester und vor allem der Acylacetarylamide, insbesondere der Acetoacetanilide. Beispiele dafür sind Reste der Formel

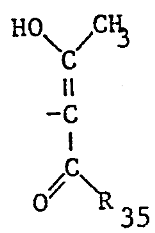

(10)

worin $R_{35}$ $-OR_{36}$, worin $R_{36}$ für $C_1$-$C_4$-Alkyl oder Phenyl steht; oder vorzugsweise $-NH-R_{37}$ oder

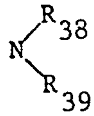 bedeutet, worin $R_{38}$ $C_1$-$C_4$-Alkyl, $R_{39}$ $C_1$-$C_4$-Alkyl oder Phenyl oder $R_{38}$ und $R_{39}$ gemeinsam die Ergänzung zu einem Morpholin-, Piperidin-, Piperazin-, Pyrrolidin- oder

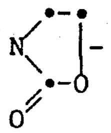 - Ring und $R_{37}$ Wasserstoff, $C_1$-$C_4$-Alkyl, Phenyl-($C_1$-$C_4$)-alkyl, Cyclohexyl, Cyclohexyl-($C_1$-$C_4$)-alkyl, Benzoyl, Naphthyl oder eine Gruppe der Formel

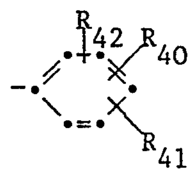

(10a)

bedeuten, wobei $R_{40}$ Wasserstoff, Halogen, $C_1$-$C_4$-Alkyl, $C_1$-$C_4$-Alkoxy, -NHCO-Alkyl($C_1$-$C_4$) oder $-SO_2NH_2$, $R_{41}$ Wasserstoff, Halogen, $C_1$-$C_4$-Alkyl oder $C_1$-$C_4$-Alkoxy und $R_{42}$ Wasserstoff oder Halogen bedeuten, insbesondere jene, worin $R_{35}$ $NHR_{37}$ ist, worin $R_{37}$ der Formel (10a) entspricht, worin $R_{40}$ Wasserstoff, $C_1$-$C_4$-Alkyl, $C_1$-$C_4$-Alkoxy oder Halogen und $R_{41}$ und $R_{42}$ jeweils Wasserstoff bedeuten.

Beispiele für Reste KK aus der Reihe der Phenole sind solche der Formel

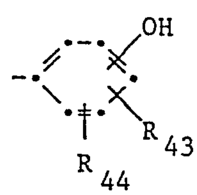

(11)

worin bedeuten: $R_{43}$ und $R_{44}$ unabhängig voneinander Wasserstoff, $C_1$-$C_4$-Alkyl, OH, $C_1$-$C_4$-Alkoxy, Alkoxycarbonyl, Acyl, Acylamino, Alkenyl, Cyclopentyl, Cyclohexyl, Aryl, Benzyl, Phenäthyl, Halogen.

Beispiele für Reste KK aus der Naphthylamin- und Naphtholreihe sind solche der Formel

(12) 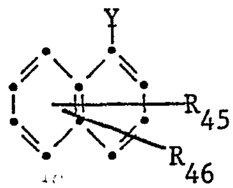 oder 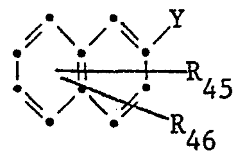 (13)

worin Y Hydroxy oder Amino,

$R_{45}$ Wasserstoff, Amino oder Hydroxy und

$R_{46}$ Wasserstoff, 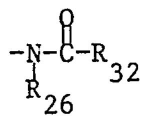, 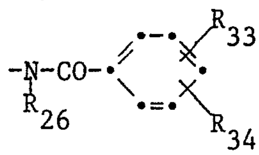, 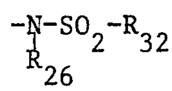 oder

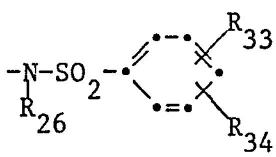 bedeuten, worin $R_{26}$, $R_{32}$, $R_{33}$ und $R_{34}$ wie weiter oben definiert sind.

Beispiele für Reste KK aus der Pyrimidin- bzw. Pyrimidonreihe sind solche der Formeln

(14) 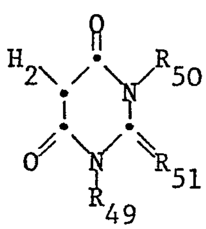 und 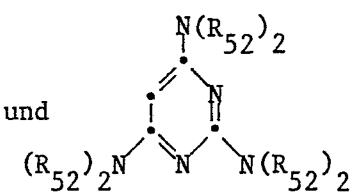 (15)

worin

$R_{49}$ und $R_{50}$ Wasserstoff oder $C_1$-$C_4$-Alkyl und

$R_{51}$ O oder N-CN und jedes $R_{52}$ unabhängig von den anderen Wasserstoff, gegebenenfalls substituiertes Alkyl, Alkenyl, Cyclopentyl, Cyclohexyl oder Aryl bedeuten.

Beispiele für Reste KK aus der Indol- und Chinolinreihe sind solche der Formeln

(16) 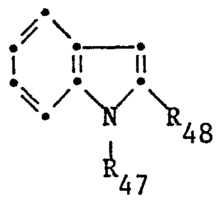 , 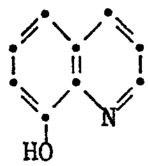 und 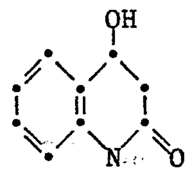 (18)

(17)

worin

$R_{47}$ Wasserstoff oder gegebenenfalls substituiertes Alkyl und $R_{48}$ Alkyl oder Aryl bedeuten.

Soweit in obigen Definitionen sowie in der gesamten übrigen Beschreibung Alkylgruppen als solche oder in zusammengesetzten Gruppen als "gegebenenfalls substituiert" bezeichnet sind, kommen als Beispiele für solche Substituenten, sofern nichts anderes angegeben ist, folgende in Frage: Hydroxy, Cyano, Halogen (z.B. Cl, Br), $C_1$-$C_4$-Alkoxy, Phenoxy oder Phenyl (beide gegebenenfalls 1-3-fach substituiert durch Halogen, Methyl oder Methoxy), Amino, Alkylamino oder Dialkylamino. Sofern ebenfalls nichts anderes angegeben ist, weisen Alkylgruppen als solche oder in zusammengesetzten Gruppen vorzugsweise 1-8, insbesondere 1-4, C-Atome, Alkenylgruppen vorzugsweise 2-8, insbesondere 2-4, C-Atome und Cycloalkylgruppen vorzugsweise 5 oder 6 C-Atome auf.

Beispiele für als nichtionische Substituenten bezeichnete Gruppen sind $C_1$-$C_4$-Alkyl, $C_1$-$C_4$-Alkoxy und Halogen. Unter Aryl wird vorzugsweise Naphthyl und insbesondere Phenyl verstanden, welches unsubstituiert oder beispielsweise durch die vorstehenden nichtionischen Gruppen substituiert ist.

Acyl bedeutet insbesondere Alkanoyl (Alkoxycarbonyl), gegebenenfalls substituiertes Benzoyl (Substituenten wie für Phenyl), Alkylsulfonyl, Phenylsulfonyl, Mono- oder Dialkylaminocarbonyl,

Benzylaminocarbonyl oder Dialkylaminosulfonyl, vor allem aber Alkylcarbonyl (Alkanoyl).

In bevorzugten Verbindungen der Formel (1) steht KK für den Rest einer Kupplungskomponente aus der Reihe der Pyridone (z.B. der Formel (8)), der Pyrazole, (z.B. der Formel (7), insbesondere, worin $R_{23}$ Alkyl, Y OH oder $NH_2$ und $R_{24}$ Alkyl, Benzyl oder Phenyl bedeuten), der Aminopyridine (z.B. der Formel (4), insbesondere, worin $R_{13}$ und $R_{15}$ H oder Alkyl, $R_{14}$ Wasserstoff oder Amino und $R_{16}$ Wasserstoff bedeuten, oder der Formel (5), insbesondere, worin $R_{17}$ und $R_{18}$ H oder Alkyl und $R_{19}$ und $R_{20}$ H, Alkyl oder zusammen die Ergänzung zu einem Pyrrolidin-, Piperidin-, Piperazin- oder Morpholinring bedeuten), der Indolreihe (z.B. der Formel (16), insbesondere, worin $R_{47}$ Wasserstoff oder Alkyl und $R_{48}$ Alkyl oder Phenyl bedeuten), des 2-Chinolons (z.B. der Formel (18)), der Phenolreihe (z.B. der Formel (11)), der Naphthol- und Naphthylaminreihe (z.B. der Formel (12) und (13)), der Anilin- und Diphenylaminreihe (z.B. der Formel (2) und (3), insbesondere, worin $R_8$ Wasserstoff oder Alkanoylamino, $R_9$ Wasserstoff und $R_{10}$ und $R_{11}$ Alkyl bedeuten) und der Acylacetester bzw. -amide, wie der Acylacetarylamide (z.B. der Formel (9), insbesondere der Formel (10)).

Besonders zu erwähnen sind die Verbindungen der Formel (1), worin KK den Rest einer Kupplungskomponente aus der Reihe der Pyridone, Acylacetarylamide, Naphthole (insbesondere der Naphtholcarbonsäureanilide der Formel (13),

worin Y = OH, $R_{45}$ = H und $R_{46}$ = 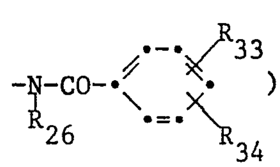 ), Aminopyridine und

Pyrazole, insbesondere der Pyridone, Acylacetarylanilide, Aminopyridine und Naphthole (einschliesslich der im vorstehenden Absatz angegebenen

bevorzugten Reste) bedeutet. Besonders bevorzugt bedeutet in Formel (1) KK den Rest einer Pyridonkupplungskomponente, insbesondere der Formel (8), beispielsweise, worin $R_6$ CN, $R_6'$ $CH_3$ und $R_7$ gegebenenfalls substituiertes $C_1$-$C_8$-Alkyl bedeuten. Substituenten für Alkyl sind z.B. Hydroxy, Cyano, Halogen, Phenoxy, $C_1$-$C_4$-Alkoxy oder Phenyl.

Die Herstellung der neuen Azoverbindungen der Formel (1) kann nach an sich bekannten Methoden erfolgen, beispielsweise, indem man ein o-Nitroanilin der Formel

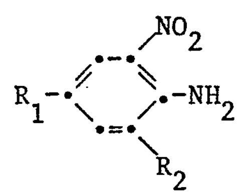

(17)

diazotiert und auf eine Kupplungskomponente der Formel HKK kuppelt, wobei $R_1$, $R_2$ und KK wie in Formel (1) definiert sind.

Die Diazotierungs- und Kupplungsreaktion kann nach üblichen Methoden durchgeführt werden, wie z.B. beschrieben in Ullmann's Enzyclopädie der technischen Chemie, Bd. 5 (1954), Seite 783 ff. Beispielsweise erfolgt die Diazotierung der Amine der Formel (17) mit Natriumnitrit in saurem, z.B. salzsaurem, essigsaurem, propionsaurem, schwefelsaurem oder phosphorsaurem, wässrigem Medium. Die Diazotierung kann aber auch mit anderen Diazotierungsmitteln, z.B. mit Nitrosylschwefelsäure ausgeführt werden. Dabei kann eine zusätzliche Säure im Reaktionsmedium anwesend sein, z.B. Phosphorsäure, Schwefelsäure, Essigsäure, Propionsäure, Salzsäure oder Mischungen dieser Säuren, z.B. Mischungen aus Phosphorsäure und Essigsäure. Zweckmässig wird die Diazotierung bei Temperaturen von -10 bis 30°C, z.B. von -10°C bis Raumtemperatur, durchgeführt.

Die Kupplung des diazotierten Amins der Formel (17) auf die Kupplungskomponente erfolgt ebenfalls in bekannter Weise, beispielsweise in saurem, wässrigem oder wässrig-organischem Medium, vorteilhaft bei

Temperaturen von -10 bis 30°C, insbesondere unter 10°C. Als Säuren verwendet man z.B. Salzsäure, Essigsäure, Schwefelsäure oder Phosphorsäure. Diazotierung und Kupplung kann beispielsweise im Eintopfverfahren, also im gleichen Reaktionsmedium, durchgeführt werden.

Die Kupplungskomponenten HKK sind aus der Literatur bekannt (siehe auch obenstehende Aufzählung von bevorzugten Klassen von Kupplungskomponenten).

Die als Diazokomponente verwendeten o-Nitroaniline der Formel (17) können z.B. durch an sich bekannte Alkylierungs- bzw. Aralkylierungsreaktionen hergestellt werden. Beispielsweise wird ein o-Nitroanilin bei erhöhter Temperatur und in Gegenwart eines wässrigen sauren Katalysators mit einem Alkylierungs- oder Aralkylierungsreagens umgesetzt, das ein oder zwei $C_3$-$C_8$-Alkylgruppen bzw. ein oder zwei Gruppen der Formel (1a) in das Molekül einführt.

Beispielsweise werden Verbindungen der Formel (17), worin nur einer der beiden Reste $R_1$ oder $R_2$ $C_3$-$C_8$-Alkyl oder eine Gruppe der Formel (1a) bedeutet, hergestellt, indem man ein o-Nitroanilin der Formel

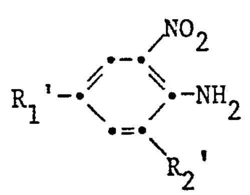

(18) ,

worin entweder $R_1$' oder $R_2$' Wasserstoff bedeuten oder eines davon Wasserstoff und das andere $C_1$-$C_4$-Alkyl oder Halogen bedeuten, mit bis zu 1 Mol eines Alkylierungs- oder Aralkylierungsmittels umsetzt.

Wenn $R_1$ und $R_2$ $C_3$-$C_8$-Alkyl oder eine Gruppe der Formel (1a) bedeuten sollen, geht man von einem Mol eines o-Nitroanilins der Formel (18) aus, worin $R_1$' und $R_2$' Wasserstoff bedeuten und setzt letzteres mit mindestens 2 Mol des Alkylierungs- bzw. Aralkylierungsmittels um. Dieses Verfahren kann auch zweistufig geführt werden, indem in einer ersten Stufe zunächst mit einem Alkylierungs- bzw. Aralkylierungsmittel und in einer zweiten Stufe mit dem gleichen oder mit einem vom ersten verschiedenen Alkylierungs- bzw. Aralkylierungsmittel umgesetzt wird.

Die Reaktion wird bei erhöhter Temperatur in einem wässrigen sauren Medium durchgeführt. Bevorzugt wird in Gegenwart eines Metallsalzes als Katalysator gearbeitet. Es kann auch ein organisches Lösungsmittel mitverwendet werden.

Die verwendeten Alkylierungs- bzw. Aralkylierungsreagenzien enthalten als reaktives Zentrum beispielsweise eine olefinische, Hydroxy-, Amino-, Halogen-, Acetoxy- oder Aether-Gruppe, die während der Reaktion eliminiert, umgewandelt oder angelagert wird.

Die Reaktionstemperatur liegt beispielsweise im Bereich von 50 - 200°C, vorzugsweise 100 - 150°C. Als Säure kann beispielsweise verwendet werden: Salzsäure, Schwefelsäure und Orthophosphorsäuren; alkyl-, aryl- und aralkylsubstituierte anorganische Säuren, z.B. Methan- oder Aethansulfonsäure, Benzolsulfonsäure, p-Toluolsulfonsäure, Methanphosphorsäure, Dichlor-, Trichlor- und Trifluoressigsäure. Die Menge an Säure beträgt z.B. 0.25 - 2 Mol pro Mol Nitroanilin der Formel (18).

Als Katalysatoren kommen z.B. Salze, Oxide, Hydroxide oder Carbonate von Metallen der Gruppen IIA, IIB, IIIA, IIIB oder VIII des Periodensystems in Betracht. Bevorzugte Metalle sind Mg, Cd, Zn, Al, Fe, Co oder Ni. Ein besonders bevorzugter Katalysator ist $ZnCl_2$.

Beispiele für o-Nitroaniline der Formel (18) sind:

2-Nitroanilin, 4-Methyl-2-nitro-anilin, 6-Methyl-2-nitro-anilin, 4-Aethyl-2-nitro-anilin, 4-n-Propyl-2-nitro-anilin, 4-iso-Propyl-2-nitro-anilin, 4-n-Butyl-2-nitro-anilin, 4-sec-Butyl-2-nitro-anilin, 4-t-Butyl-2-nitro-anilin, 4-n-Octyl-2-nitro-anilin, 4-(1,1,3,3-Tetramethyl-butyl)-2-nitro-anilin, 4-Chlor-2-nitro-anilin, 6-Chlor-2-nitro-anilin.

Alkylierungs- bzw. Aralkylierungsmittel sind z.B. Olefine, Alkohole Aether, Alkyl- oder Aralkylamine, Alkyl- oder Aralkylhalogenide, Alkyl- oder Aralkylacetate. Beispiele hiefür sind:
Benzylalkohol, Benzylmethyläther, Benzylchlorid, Benzylacetat, Benzylamin, 2-Chlorbenzylalkohol, 3-Chlorbenzylalkohol, 4-Chlorbenzylalkohol, 2-Methylbenzylalkohol, 3-Methylbenzylalkohol, 4-Methylbenzylalkohol, α-Methylbenzylalkohol, α-Methylbenzylamin, Styrol, 2-Methylstyrol, 3-Methylstyrol, 4-Methylstyrol, 2-Chlorstyrol, 3-Chlorstyrol, 4-Chlorstyrol, α-Methylstyrol, Cumylalkohol, Cumylacetat, β-Methylstyrol, Allylbenzol, 4-Chlor-α-methylstyrol, 4-Chlor-cumylalkohol, 4-iso-Propyl-α-methylstyrol, tert.-Butylchlorid, iso-Propylchlorid oder Mischungen dieser Verbindungen.

Als Beispiele für die Diazokomponente der Formel (17) seien die folgenden Verbindungen genannt:
4-Benzyl-2-nitro-anilin, 6-Benzyl-2-nitro-anilin, 4-(α-Methylbenzyl)-2-nitro-anilin, 6-(α-Methylbenzyl)-2-nitro-anilin, 4-(α-Aethylbenzyl)-2-nitro-anilin, 6-(α-Aethylbenzyl)-2-nitro-anilin, 4-Cumyl-2-nitro-anilin, 4-(4-Methyl-α-methylbenzyl)-2-nitro-anilin, 6-(4-Methyl-α-methylbenzyl)-2-nitro-anilin, 4-(4-iso-Propyl-α,α-dimethylbenzyl)-2-nitro-anilin, 4-(2-Chlor-α-methylbenzyl)-2-nitro-anilin, 6-(2-Chlor-

α-methylbenzyl)-2-nitro-anilin, 4-(3-Chlor-α-methylbenzyl)-2-nitro-anilin, 6-(3-Chlor-α-methylbenzyl)-2-nitro-anilin, 4-(4-Chlor-α-methylbenzyl)-2-nitro-anilin, 6-(4-Chlor-α-methylbenzyl)-2-nitro-anilin, 4-(4-Chlor-α,α-dimethylbenzyl)-2-nitro-anilin, 6-Benzyl-4-methyl-2-nitro-anilin, 6-Methyl-4-(α-methylbenzyl)-2-nitro-anilin, 4-Methyl-6-(α-methylbenzyl)-2-nitro-anilin, 6-(α-Aethylbenzyl)-4-methyl-2-nitro-anilin, 4-Cumyl-6-methyl-6-methyl-2-nitro-anilin, 4-Methyl-6-(4-methyl-α-methylbenzyl)-2-nitro-anilin, 6-Methyl-4-(4-isopropyl-α,α-dimethylbenzyl)-2-nitro-anilin, 6-(2-Chlor-α-methylbenzyl)-4-methyl-2-nitro-anilin, 6-(3-Chlor-α-methylbenzyl)-4-methyl-2-nitro-anilin, 6-(4-Chlor-α-methylbenzyl)-4-methyl-2-nitro-anilin, 4-(4-Chlor-α,α-dimethylbenzyl)-6-methyl-2-nitro-anilin, 6-Benzyl-4-t-butyl-2-nitro-anilin, 4-t-Butyl-6-(α-methylbenzyl)-2-nitro-anilin, 4-t-Butyl-6-äthylbenzyl)-2-nitro-anilin, 4-t-Butyl-6-(4-methyl-α-methylbenzyl)-2-nitro-anilin, 4-t-Butyl-6-(2-chlor-α-methylbenzyl)-2-nitro-anilin, 4-t-Butyl-6-(3-chlor-α-methylbenzyl)-2-nitro-anilin, 4-t-Butyl-6-(4-chlor-α-methylbenzyl)-2-nitro-anilin, 6-(α-Methylbenzyl)-4-(1,1,3,3-tetramethylbutyl)-2-nitro-anilin, 6-(4-Methyl-α-methylbenzyl)-4-(1,1,3,3-tetramethylbenzyl)-2-nitro-anilin, 6-(4-Chlor-α-methylbenzyl)-4-(1,1,3,3-tetramethylbutyl)-2-nitro-anilin, 4-Chlor-6-benzyl-2-nitro-anilin, 4-Chlor-6-(α-methylbenzyl)-2-nitro-anilin, 4-Chlor-6-(α-äthylbenzyl)-2-nitro-anilin, 4-Chlor-6-(4-methyl-α-methylbenzyl)-2-nitro-anilin, 4-Chlor-6-(4-chlor-α-methylbenzyl)-2-nitro-anilin, 4,6-Dibenzyl-2-nitro-anilin, 4,6-Bis-(α-methylbenzyl)-2-nitro-anilin, 4,6-Bis-(α-äthylbenzyl)-2-nitro-anilin, 4,6-Bis-(4-methyl-α-methylbenzyl)-2-nitro-anilin, 4,6-Bis-(4-chlor-α-methylbenzyl)-2-nitro-anilin, 4-Cumyl-6-(α-methylbenzyl)-2-nitro-anilin, 4-(4-Chlor-α-methylbenzyl)-4-(4-methyl-α-methylbenzyl)-2-nitro-anilin, 4-t-Butyl-2-nitro-anilin, 4-iso-Propyl-2-nitro-anilin, 4-t-Butyl-6-äthyl-2-nitro-anilin, 4-(α,α-Dimethylbenzyl)-6-methyl-2-nitro-anilin, 4-(α,α-Dimethylbenzyl)-2-nitro-anilin, 4-(α,α-Dimethylbenzyl-6-n-butyl-2-nitro-anilin.

Die Verbindungen der Formel (17), in denen $R_1$ oder/und $R_2$ $C_3$-$C_8$-Alkyl bedeuten, sind auch aus der Literatur bekannt oder können nach den dort beschriebenen Verfahren hergestellt werden.

Die erfindungsgemässen Verbindungen der Formel (1) können als Farbstoffe zum Färben und Bedrucken von halbsynthetischen und, insbesondere, synthetischen hyrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Als halbsynthetische Textilmaterialien kommen vor allem Cellulose-2 1/2-Acetat und Cellulosetriacetat in Frage.

Synthetische hydrophobe Textilmaterialien bestehen vor allem aus linearen, aromatischen Polyestern, beispielsweise solchen aus Terephthalsäure und Glykolen, besonders Aethylenglykol oder Kondensationsprodukten aus Terephthalsäure und 1,4-Bis-(hydroxymethyl)-hexahydrobenzol; aus Polycarbonaten, z.B. solchen aus α,α-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nichtionischen Dispergiermitteln und gegebenenfalls üblichen Quellmitteln (Carrier) bei Temperaturen zwischen 80 und 140°C. Cellulose-2 1/2-acetat färbt man vorzugsweise zwischen ungefähr 65 bis 85°C und Cellulosetriacetat bei Temperaturen bis zu 115°C.

Die neuen Farbstoffe färben im Färbebad gleichzeitig anwesende Wolle und Baumwolle nicht oder nur wenig an (sehr gute Reserve), so dass sie auch gut zum Färben des Polyesteranteils in Polyester/Wolle- und Polyester/Cellulosefaser-Mischgeweben verwendet werden können.

Die erfindungsgemässen Farbstoffe eignen sich ferner zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat überzuführen. Hierzu wird der Farbstoff vermahlen, so dass seine Teilchengrösse im Mittel zwischen 0,01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, Britishgummi, Gummi arabicum, Kristallgummi, Johannisbrotkernmehl, Tragant, Carboxymethylcellulose, Hydroxyäthylcellulose, Stärke oder synthetische Produkte, beispielsweise Polyacrylamide, Polyacrylsäure oder deren Copolymere oder Polyvinylalkohole.

Die erfindungsgemässen Farbstoffe sind praktisch unempfindlich gegen Carrier und verleihen den genannten Materialien, vor allem dem Polyestermaterial, egale Farbtöne von sehr guten Gebrauchs-Echtheiten, wie vor allem guter Lichtechtheit, guter Sublimierechtheit, Thermofixier-, Plissier-, Chlor- und Nassechtheit wie Wasser-, Schweiss- und Waschechtheit; die Ausfärbungen sind ferner gekennzeichnet durch eine gute pH-Stabilität und sehr gute Reibechtheit. Es werden ausserdem sehr farbstarke Färbungen erzielt, die kein "catalytic fading" zeigen. Viele der erfindungsgemässen Farbstoffe sind auch sublimierecht.

Die erfindungsgemässen Farbstoffe können auch gut verwendet werden zur Herstellung von Mischnuancen zusammen mit anderen Farbstoffen. Selbstverständlich können auch Mischungen der erfindungsgemässen Farbstoffe untereinander verwendet werden.

Die vorstehend genannte Verwendung der erfindungsgemässen Azoverbindungen der Formel (1) stellt ebenso einen Gegenstand der vorliegenden Erfindung dar wie ein Verfahren zum Färben oder Bedrucken von halbsynthetischem oder synthetischem hydrophobem Fasermaterial, insbesondere Textilmaterial, das darin besteht, eine oder mehrere Verbindungen der Formel (1) auf das genannte Material aufzubringen oder es diesem einzuverleiben. Das genannte hydrophobe Fasermaterial ist vorzugsweise textiles Polyestermaterial. Weitere Substrate, die durch das erfindungsgemässe Verfahren behandelt werden können sowie bevorzugte Verfahrensbedingungen sind vorstehend bei der näheren Erläuterung der Verwendung der erfindungsgemässen Verbindungen zu finden.

Ein weiterer Gegenstand der Erfindung ist das durch das genannte Verfahren gefärbte bzw. bedruckte hydrophobe Fasermaterial, vorzugsweise Polyester-Textilmaterial.

Die folgenden Beispiele veranschaulichen die Erfindung weiter, ohne sie darauf zu beschränken. Teile und Prozente beziehen sich,

sofern nichts anderes angegeben ist, auf das Gewicht. Schmelzpunkte sind unkorrigiert.

Beispiel 1: 12,8 g (0,05 Mol) 4-(α,α-Dimethylbenzyl)-2-nitroanilin werden in 85 ml Eisessig und 15 ml Propionsäure gelöst. Die Lösung wird mit 12,5 ml 32 %iger Salzsäure versetzt, auf 0°C gekühlt und innerhalb von 10 Minuten bei 0 bis 5°C unter Eiskühlung mit 12,5 ml 4 m Natriumnitritlösung diazotiert und danach 45 Minuten lang bei 0 bis 5°C nachgerührt. Die Diazoniumsalzlösung wird dann innerhalb von etwa 20 Minuten in eine Lösung von 9,4 g (0,053 Mol) 1-Aethyl-3-cyano-4-methyl-6-hydroxy-pyridon(2) in 200 ml Wasser und 5 ml 30 %iger Natriumhydroxidlösung unter Kühlung bei 0 bis 10°C eingetropft, wobei der pH-Wert mit verdünntem wässrigem Ammoniak bei 4 gehalten wird. Nach einstündigem Rühren bei maximal 10°C wird der entstandene Niederschlag abgenutscht, mit verdünntem Ammoniak und anschliessend mit Wasser gewaschen und im Vakuum bei 80°C getrocknet. Man erhält 20,7 g der Azoverbindung der Formel

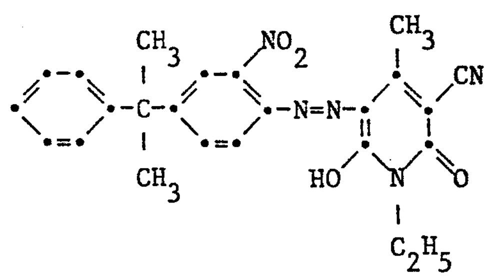

(101)

als orangegelbes Pulver, das nach Sintern bei 180°C bei 213 - 216°C schmilzt. Nach zweimaligem Umkristallisieren aus Aethylacetat ist der Schmelzpunkt bei 221 - 222°C (Sintern bei 216°C). Farbton auf Polyester: gelb.

Beispiel 2: Arbeitet man nach der in Beispiel 1 angegebenen Vorschrift und setzt als Ausgangsprodukte in 4-Stellung entsprechend substituierte o-Nitroaniline bzw. entsprechend N-substituierte Pyridone ein, so erhält man die in der Tabelle 1 angegebenen Azoverbindungen der Formel

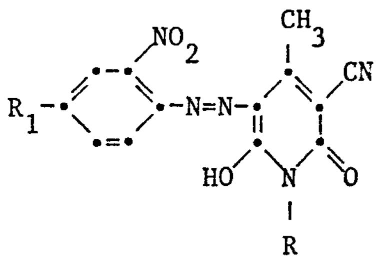

Tabelle 1

| Verbindung No. | $R_1$ | R | Schmelzpunkt (°C) |
|---|---|---|---|
| 201 | 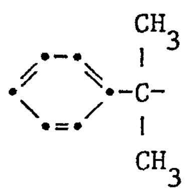 | H | 308 - 310 |
| 202 | " | $CH_3$ | 254 - 258 |
| 203 | " | $n-C_4H_9$ | 170 - 172 |
| 204 | $t-C_4H_9$ | $C_2H_5$ | 248 - 249 |
| 205 | $t-C_4H_9$ | H | 310 - 312 |

Farbton der Verbindungen 201 - 205 auf Polyester: gelb.

Beispiel 3: Setzt man als Ausgangsprodukte entsprechend substituierte o-Nitroaniline als Diazokomponenten und entsprechend N-substituierte Pyridone als Kupplungskomponenten ein und arbeitet analog der im Beispiel 1 angegebenen Vorschrift, so erhält man die in der Tabelle 2 angegebenen Verbindungen der Formel

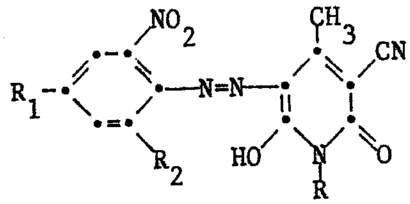

Tabelle 2

| Verbindung No. | $R_1$ | $R_2$ | R |
|---|---|---|---|
| 301 | 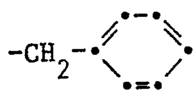 | H | $CH_3$ |
| 302 | " | H | $C_2H_5$ |
| 303 | " | H | $-(CH_2)_3CH_3$ |
| 304 | " | H | 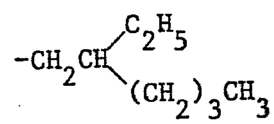 |
| 305 | 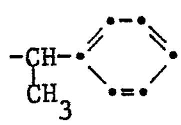 | H | $-(CH_2)_2CH_3$ |
| 306 | " | H | $-CH(CH_3)_2$ |
| 307 | " | H | 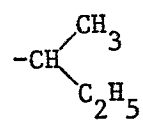 |
| 308 | $-CH(CH_3)_2$ | H | $-(CH_2)_3CH_3$ |
| 309 | " | H | 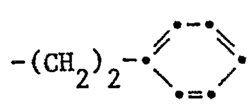 |
| 310 | 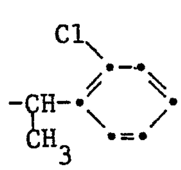 | H | $C_2H_5$ |

Tabelle 2 (Fortsetzung)

| Verbindung No. | $R_1$ | $R_2$ | R |
|---|---|---|---|
| 311 | 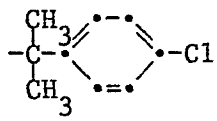 | H | $CH_3$ |
| 312 | 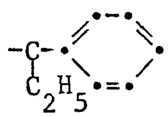 | H | $C_2H_5$ |
| 313 | $CH_3$ | 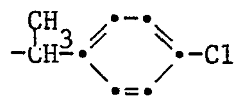 | $CH_3$ |
| 314 | $CH_3$ | 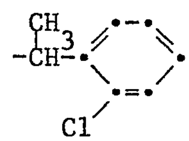 | $C_2H_5$ |
| 315 | 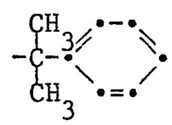 | H | $-CH_2CH_2OH$ |
| 316 | " | H | $-(CH_2)_3-O-CH(CH_3)_2$ |
| 317 | " | H | $-CH_2\underset{OH}{CH}CH_3$ |
| 318 | " | H | $-CH_2CH_2-O-$ 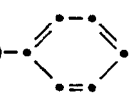 |

Farbton der Verbindungen 301 - 318 auf Polyester: gelb.

Beispiel 4: Wiederholt man Beispiel 1, setzt jedoch an Stelle der Pyridon-Kupplungskomponente 4-Nitrodiphenylamin, 3-Methyl-N,N-di-(2-hydroxyäthyl)-anilin, 3-Acetylamino-N,N-diäthylanilin, Phenol, 1-Phenyl-3-methyl-5-hydroxypyrazol, Acetoacet-o-anisidid, 6-(N-Methyl-N-hydroxyäthylsulfonamido)-2-naphthol, 3-(N-o-Aethoxyphenylcarbonamido)-2-naphthol, 2-Phenylindol, 6-(N-Methylsulfonamido)-2-naphthylamin, 2,4-Diamino-5-cyano-6-piperidino(1)-pyridin, 2,6-Diaminopyridin, 1-Methyl-4-hydroxychinolon(2), 2-Methylindol oder 1-Phenyl-2-amino-

-4-methyl-pyrazol ein, so erhält man die folgenden Verbindungen der Formeln:

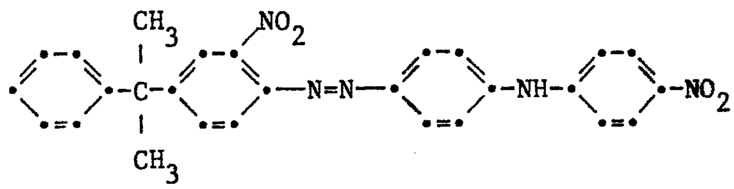
(401)

Schmelzpunkt: 196 - 199°C (Sintern bei 191°C).

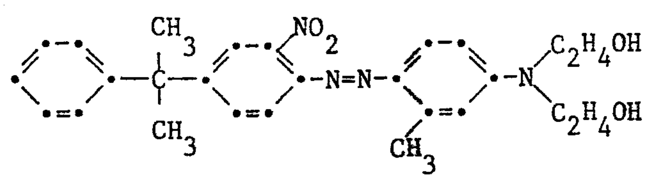
(402)

amorph. Farbton auf Polyester: orange.

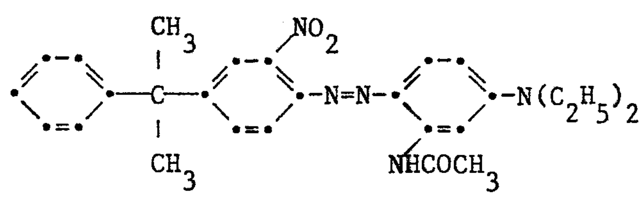
(403)

Schmelzpunkt 112 - 114°C. Farbton a Polyester: scharlachrot.

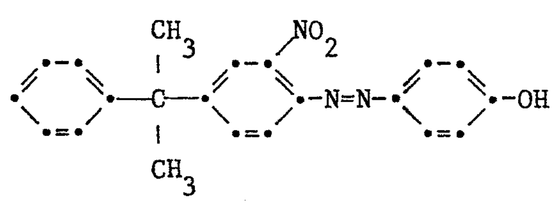
(404)

amorph. Farbton auf Polyester: bräunlichgelb.

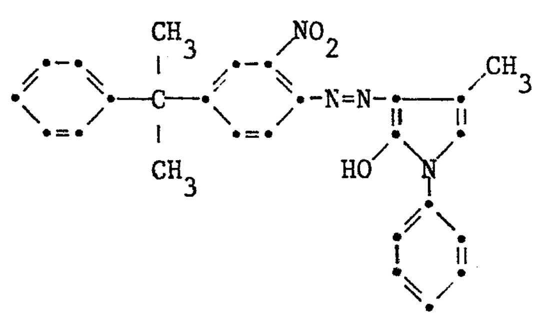
(405)

Schmelzpunkt: 120 - 123°C. arbton auf Polyester: gelb.

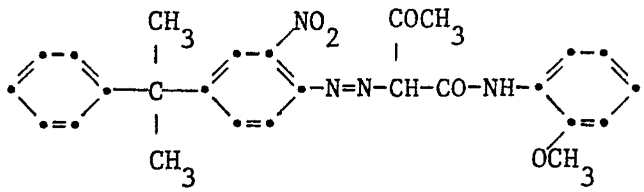

(406)

Schmelzpunkt: 200 - 203°C. Farbton auf Polyester: gelb.

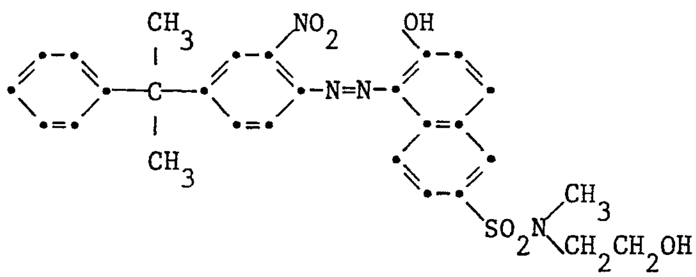

(407)

Schmelzpunkt: 205 - 209°C. Farbton auf Polyester: rot.

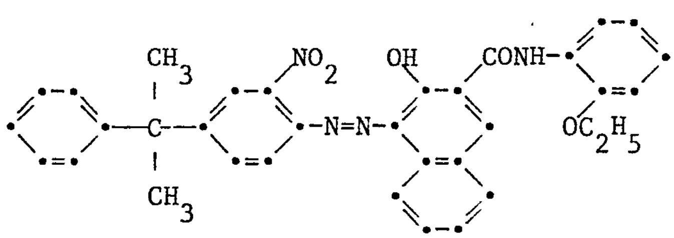

(408)

Schmelzpunkt: 194 - 200°C. Farbton auf Polyester: rot.

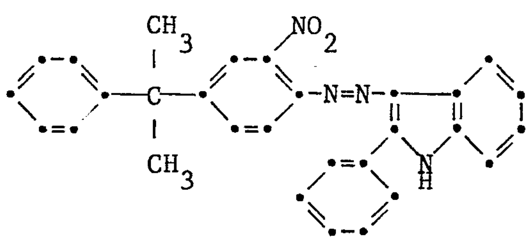

(409)

Schmelzpunkt: 173 - 177°C. Farbton auf Polyester: orange.

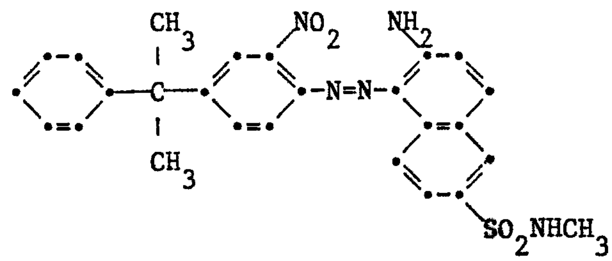

(410)

Schmelzpunkt: 210 - 215°C. Farbton auf Polyester: rot.

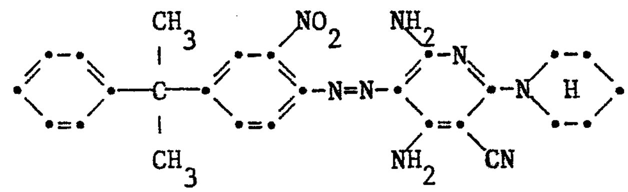

(411)

Schmelzpunkt: 125 - 130°C. Farbton auf Polyester: orange.

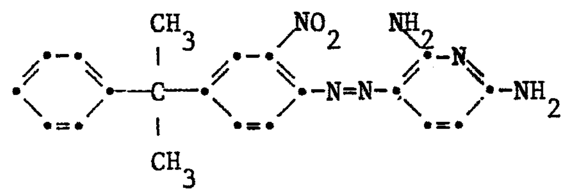

(412)

Schmelzpunkt: 140 - 145°C. Farbton auf Polyester: scharlachrot.

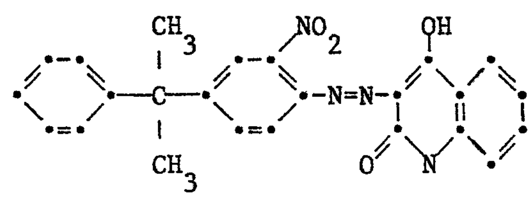

(413)

Schmelzpunkt: 178 - 185°C.

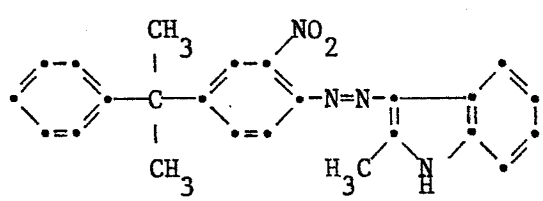

(414)

Schmelzpunkt: 95 - 98°C.

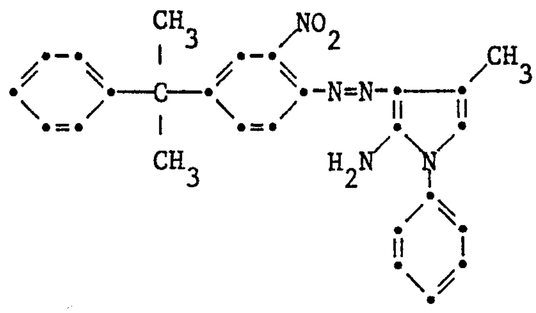

(415)

Schmelzpunkt: 170 - 175°C. Farbton auf Polyester: gelb.

Beispiel 5: Das als Ausgangsprodukt zur Herstellung der Verbindungen der Formeln 101, 201 - 203, 311, 315 - 318 und 401 - 415 benötigte 4-(α,α-Dimethylbenzyl)-2-nitroanilin kann folgendermassen erhalten werden:

Zu einer Lösung von 13,4 Teilen wasserfreiem $ZnCl_2$ in 20,4 Teilen 36 %iger Salzsäure werden 27,6 Teile o-Nitroanilin zugegeben. Zu der auf Rückflusstemperatur erhitzten Mischung werden während 1 Stunde unter Rühren 23,6 Teile α-Methylstyrol zugetropft. Nach zweistündigem Nachrühren bei Rückflusstemperatur wird die heisse Reaktionsmischung in eine Lösung von 50 Teilen Natriumhydroxid in 100 Teilen Wasser gegossen. Nach 15 minütigem Rühren wird die Mischung abkühlen gelassen, worauf sich die organische Phase verfestigt. Nach Filtrieren, Waschen mit Wasser, Trocknen und Umkristallisieren derselben aus Aethanol erhält man 4-(α,α-Dimethylbenzyl)-2-nitroanilin als orangefarbene Kristalle mit einem Schmelzpunkt von 92 - 94°C.

Auf analoge Weise können die in der nachstehenden Tabelle 3 angeführten o-Nitroaniline hergestellt werden, die als Ausgangsverbindungen der Formel 17 zur Herstellung von erfindungsgemässen Farbstoffen der Formel 1 eingesetzt werden können.

Tabelle 3

| Verbindung | Schmelzpunkt (°C) |
|---|---|
| 4-Benzyl-2-nitroanilin | 80 - 83 |
| 6-Benzyl-2-nitroanilin | 90 - 93 |
| 4-(α-Methylbenzyl)-2-nitroanilin | 96 - 98 |
| 6-(α-Methylbenzyl)-2-nitroanilin | 70 - 73 |
| 4,6-bis-(α-Methylbenzyl)-2-nitroanilin | *) |
| 4-(α-Aethylbenzyl)-2-nitroanilin | 83 - 85 |
| 4-(4-Methyl-α-methylbenzyl)-2-nitroanilin | 92 - 95 |
| 4-(4-Isopropyl-α,α-dimethylbenzyl-2-nitroanilin | 109 - 111 |
| 4-(2-Chlor-α-methylbenzyl)-2-nitroanilin | 97 - 100 |
| 4-(4-Chlor-α-methylbenzyl)-2-nitroanilin | 122 - 125 |
| 4-(4-Chlor-α,α-dimethylbenzyl)-2-nitroanilin | 83 - 85 |
| 4-Methyl-6-(4-methyl-α-methylbenzyl)-2-nitroanilin | 107 - 109 |
| 6-(α-Aethylbenzyl)-4-methyl-2-nitroanilin | 107 - 110 |
| 6-Methyl-4-(α,α-dimethylbenzyl)-2-nitroanilin | 119 - 121 |
| 4-Methyl-6-(4-methyl-α-methylbenzyl)-2-nitroanilin | 150 - 153 |
| 6-(4-Chlor-α-methylbenzyl)-4-methyl-2-nitroanilin | 120 - 123 |
| 4-Chlor-6-(α-methylbenzyl)-2-nitroanilin | 93 - 95 |
| 6-(2-Chlor-α-methylbenzyl)-4-methyl-2-nitroanilin | 100 - 103 |

*) Siedepunkt 220°C bei 0,4 mb

Das für die Herstellung der Verbindungen der Formeln 204 und 205 benötigte 4-t-Butyl-2-nitroanilin (Schmelzpunkt: 102,5 - 105,5) ist bekannt, z.B. aus C.A. Vol. 46(1952), 1493i.

Beispiel 6: 1 Teil der Azoverbindung der Formel 101, 202 oder 203 wird mit jeweils 2 Teilen einer 50 %igen wässrigen Lösung des Natriumsalzes der Dinaphthylmethandisulfonsäure nass vermahlen und getrocknet.

0,012 Teile dieses Farbstoffpräparates werden mit 0,1 Teilen Oleylmethyltaurid-Natriumsalz, 0,1 Teilen Dinaphthylmethandisulfonsäure-Natriumsalz und 0,5 Teilen Ammonsulfat verrührt. Durch Verdünnen mit Wasser wird daraus ein Färbebad von 200 Teilen bereitet und dessen pH Wert mit 85 %iger wässriger Ameisensäure auf 5 gestellt. Diesem Bad gibt man bei 50°C 10 Teile eines Diolen-Gewebes (Polyester) zu, steigert die Temperatur innerhalb 30 Minuten in geschlossenem Gefäss auf 120°C und dann innerhalb weiterer 10 Minuten auf 130°C. Anschliessend wird gut gespült. Man erhält jeweils eine kräftige gelbe Färbung, wobei der Farbstoff sehr gut aus dem Färbebad ausgezogen ist. Diese Färbung ist stabil, zeigt kein catalytic fading und ist gut sublimierecht.

Beispiel 7: In 360 ml eines auf 60°C vorgeheizten wässrigen Färbebades enthaltend 0,1 g der Azoverbindung der Formel 101, 202 oder 203, 0,2 g eines Wollegalisiermittels, 0,72 g Ammonsulfat, 1,08 g eines Carriers (auf Basis Trichlorbenzol) und mit 85 %iger wässriger Ameisensäure auf pH 5,5 gestellt, geht man mit 40 g eines Stoffwickels aus einem Polyester-Woll-Mischgewebe (55 % Polyesteranteil, 45 % Wollanteil, vorgewaschen, bei 140°C getrocknet und 30 Sekunden bei 180°C thermofixiert) ein. (Pretema-Multicolor-Apparat). Man steigert die Temperatur dieses Färbebades während 30 Minuten auf 105°C und färbt 45 Minuten bei dieser Temperatur. Anschliessend lässt man das Färbebad auf 80°C abkühlen und spült das Färbegut

zweimal 5 Minuten bei 70°C und einmal während 5 Minuten mit kaltem Wasser. Man erhält jeweils ein egal gelb gefärbtes Polyester-Woll-Mischgewebe, wobei die Färbung eine sehr gute Reibechtheit und Sublimierechtheit aufweist.

Setzt man in den Färbebeispielen 6 und 7 die Verbindungen 201, 204, 205, 301-318 oder 401-415 als Farbstoffe ein, so erhält man ebenfalls gute Färbungen mit der bei der jeweiligen Verbindung angeführten Nuance.

Patentansprüche

1. Monoazoverbindungen der Formel

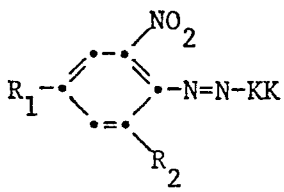

, (1)

worin einer der beiden Substituenten $R_1$ oder $R_2$ oder beide Substituenten $C_3$-$C_8$-Alkyl oder eine Gruppe der Formel

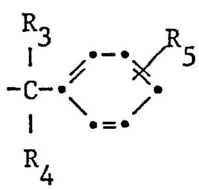

, (1a)

worin $R_3$ und $R_4$ unabhängig voneinander für Wasserstoff oder $C_1$-$C_4$-Alkyl und $R_5$ für Wasserstoff, Halogen oder $C_1$-$C_4$-Alkyl stehen, und der andere der beiden Substituenten $R_1$ oder $R_2$, wenn nicht beide $C_3$-$C_8$-Alkyl oder eine Gruppe der Formel (1a) bedeuten, Wasserstoff, Halogen oder $C_1$-$C_4$-Alkyl und KK den Rest einer von wasserlöslich machenden Gruppen freien Kupplungskomponente bedeuten.

2. Monoazoverbindungen nach Anspruch 1, worin nur einer der beiden Substituenten $R_1$ oder $R_2$ $C_3$-$C_8$-Alkyl, vorzugsweise $C_4$-$C_8$-Alkyl, oder eine Gruppe der Formel

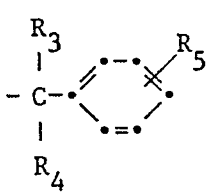

bedeutet, vorzugsweise der Substituent $R_1$.

3. Monoazoverbindungen nach Anspruch 1, worin einer der beiden Substituenten $R_1$ oder $R_2$ für die Gruppe

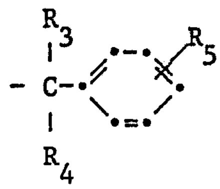

steht.

4. Monoazoverbindungen nach Anspruch 2 oder 3, worin $R_2$ für Wasserstoff steht.

5. Monoazoverbindungen nach Anspruch 4, worin $R_1$ für die Gruppe

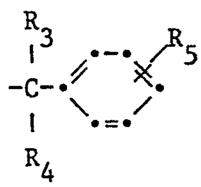

steht.

6. Monoazoverbindungen nach einem der Ansprüche 1 - 5, worin mindestens einer der beiden Substituenten $R_3$ oder $R_4$ Methyl bedeutet.

7. Monoazoverbindungen nach einem der Ansprüche 1 - 6, worin KK den Rest einer Kupplungskomponente aus der Reihe der Acylacetarylamide, Phenole, Pyridone, Chinoline, Pyrazole, Indole, Diphenylamine, Aniline, Aminopyridine, Naphthole, Naphthylamine, Aminothiazole, Thiophene oder Hydroxypyridine bedeutet.

8. Monoazoverbindungen nach Anspruch 7, worin KK den Rest einer Kupplungskomponente aus der Reihe der Acylacetarylamide, Phenole, Naphthole, Naphthylamine, Aniline, Diphenylamine, Pyridone, Pyrazole, Aminopyridine, Indole oder Chinoline bedeutet.

9. Monoazoverbindungen nach einem der Ansprüche 1 bis 6, worin KK den Rest einer heterocyclischen Kupplungskomponente bedeutet.

10. Monoazoverbindungen nach Anspruch 7, worin KK der Rest einer Kupplungskomponente aus der Reihe der Acylacetanilide, Naphthole, Pyridone, Pyrazole oder Aminopyridine, vorzugsweise der Pyridone, ist.

11. Monoazoverbindungen nach Anspruch 10, worin KK ein Pyridonrest der Formel

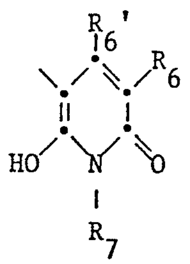

ist, worin $R_6$ Alkyl, CN, $CONH_2$ oder $SO_2NH_2$ $R_6'$ Alkyl und $R_7$ Wasserstoff, Alkenyl, Aryl oder gegebenenfalls substituiertes $C_1$-$C_8$-Alkyl bedeuten.

12. Monoazoverbindungen nach Anspruch 11, worin $R_6$ CN, $R_6'$ $CH_3$ und $R_7$ gegebenenfalls durch Hydroxy, Cyano, $C_1$-$C_4$-Alkoxy, Phenoxy oder Phenyl substituiertes $C_1$-$C_8$-Alkyl bedeuten.

13. Monoazoverbindungen nach Anspruch 8, worin KK ein Rest der Formel

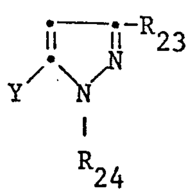

ist, worin Y Hydroxy oder Amino,

$R_{24}$ H, $C_1$-$C_4$-Alkyl, Alkenyl, Cyclohexyl, Aryl, Benzyl oder Phenyläthyl, und $R_{23}$ $COOR_{24}$ oder $CONHR_{24}$ bedeuten.

14. Monoazoverbindungen nach Anspruch 8, worin KK ein Rest der Formel

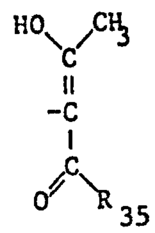

ist, worin $R_{35}$ $-OR_{36}$, worin $R_{36}$ für $C_1$-$C_4$-Alkyl oder Phenyl steht; oder vorzugsweise $-NH-R_{37}$ oder

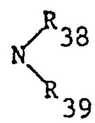 bedeutet, worin $R_{38}$ $C_1$-$C_4$-Alkyl, $R_{39}$ $C_1$-$C_4$-Alkyl oder Phenyl oder $R_{38}$ und $R_{39}$ gemeinsam die Ergänzung zu einem Morpholin-, Piperidin-, Piperazin-, Pyrrolidin- oder

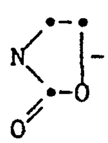 - Ring und $R_{37}$ Wasserstoff, $C_1$-$C_4$-Alkyl, Phenyl-($C_1$-$C_4$)-alkyl, Cyclohexyl, Cyclohexyl-($C_1$-$C_4$)-alkyl, Benzoyl, Naphthyl oder eine Gruppe der Formel

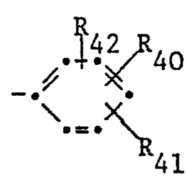

bedeuten, wobei $R_{40}$ Wasserstoff, Halogen, $C_1$-$C_4$-Alkyl, $C_1$-$C_4$-Alkoxy, -NHCO-Alkyl($C_1$-$C_4$) oder $-SO_2NH_2$, $R_{41}$ Wasserstoff, Halogen, $C_1$-$C_4$-Alkyl oder $C_1$-$C_4$-Alkoxy und $R_{42}$ Wasserstoff oder Halogen bedeuten.

15. Monoazoverbindungen nach Anspruch 8, worin KK ein Rest der Formel

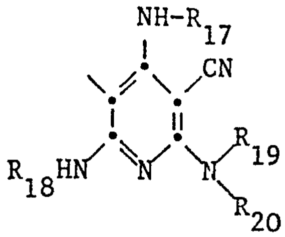

ist, worin

$R_{17}$ und $R_{18}$ eine gegebenenfalls durch $C_1$-$C_8$-Alkoxy substituierte $C_1$-$C_8$-Alkylgruppe, oder Wasserstoff,

$R_{19}$ und $R_{20}$ jeweils Wasserstoff, eine $C_1$-$C_8$-Alkylgruppe, die durch Hydroxy, Amino, $C_1$-$C_8$-Alkoxy oder $NT_1T_2$ substituiert sein kann, eine gegebenenfalls durch Methylreste substituierte Cycloalkylgruppe, eine gegebenenfalls durch 1 bis 3 Chlor, $C_1$-$C_4$-Alkyl oder $C_1$-$C_4$-Alkoxy substituierte Benzylgruppe, oder $R_{19}$ und $R_{20}$ die Ergänzung zu einem, vorzugsweise gesättigten, 5- oder 6-gliedrigen heterocyclischen Ring, der gegebenenfalls noch ein weiteres Heteroatom als Ringglied enthalten kann, insbesondere die Ergänzung zu einem Pyrrolidin-, Piperidin-, Piperazin- oder Morpholinring, und $T_1$ und $T_2$ je $C_1$-$C_8$-Alkyl bedeuten.

16. Monoazoverbindungen nach Anspruch 7, worin KK ein Rest der Formel

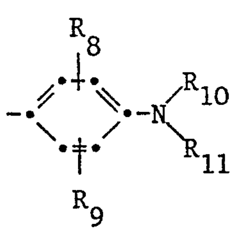

oder

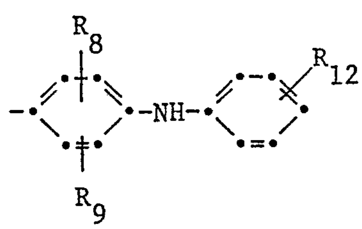

ist, worin

$R_8$ Wasserstoff, $C_1$-$C_4$-Alkyl, OH, $C_1$-$C_4$-Alkoxy, Halogen oder Acylamino,

$R_9$ Wasserstoff, $C_1$-$C_4$-Alkyl, Halogen, OH, $C_1$-$C_4$-Alkoxy oder Amino, oder $R_8$ und $R_9$ zusammen die Ergänzung zu einem ankondensierten

Benzo- oder Tetrahydrobenzorest,

$R_{10}$ und $R_{11}$ unabhängig voneinander Wasserstoff, $C_1$-$C_8$-Alkyl, Alkenyl, Cycloalkyl, Aryl, Benzyl, Phenäthyl, $C_1$-$C_4$-Hydroxyalkyl, $C_1$-$C_5$-Cyanoalkyl oder $C_1$-$C_4$-Halogenalkyl, oder $R_{10}$ und $R_{11}$ zusammen mit dem N-Atom die Ergänzung zu einem Morpholin-, Piperidin- oder Piperazinrest oder $R_{10}$ gemeinsam mit $R_9$ in ortho-Stellung zur Aminogruppe die Ergänzung zu einem ankondensierten 5- oder 6-gliedrigen N-Heterocyclus, und

$R_{12}$ Wasserstoff, $C_1$-$C_4$-Alkyl, Halogen, Nitro oder $C_1$-$C_4$-Alkoxy bedeuten.

17. Monoazoverbindungen nach Anspruch 8, worin KK ein Rest der Formel

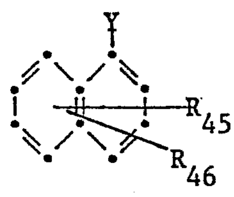 oder 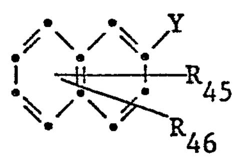

ist, worin Y Hydroxy oder Amino,

$R_{45}$ Wasserstoff, Amino oder Hydroxy und

$R_{46}$ Wasserstoff, 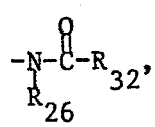, 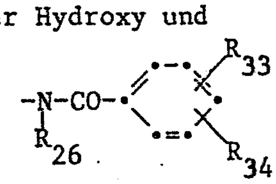, 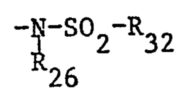 oder 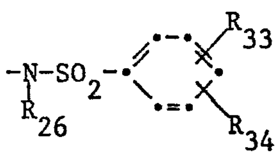 bedeuten, worin $R_{26}$ $C_1$-$C_4$-Alkyl oder Wasserstoff,

$R_{32}$ gegebenenfalls substituiertes Alkyl mit 1-8 Kohlenstoffatomen, Cycloalkyl, Amino, Alkylamino, Dialkylamino, Phenylamino, Alkoxy oder Phenoxy und

$R_{33}$ und $R_{34}$ unabhängig voneinander Wasserstoff, $C_1$-$C_4$-Alkyl, $C_1$-$C_4$-Alkoxy, Halogen oder Dialkylamino bedeuten.

18. Verfahren zur Herstellung von im Anspruch 1 definierten Monoazoverbindungen, dadurch gekennzeichnet, dass man ein o-Nitroanilin

der Formel

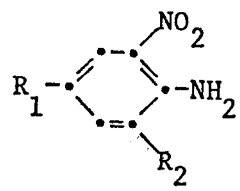

diazotiert und auf eine Kupplungskomponente der Formel HKK kuppelt, wobei $R_1$, $R_2$ und KK wie in Anspruch 1 definiert sind.

19. Verwendung von im Anspruch 1 definierten Azoverbindungen als Farbstoffe zum Färben oder Bedrucken von halbsynthetischem oder synthetischem hydrophobem Fasermaterial, insbesondere Textilmaterial.

20. Verwendung nach Anspruch 19 zum Färben oder Bedrucken von Textilmaterial aus Polyester.

21. Das durch die Verwendung gemäss Anspruch 19 oder 20 gefärbte oder bedruckte Material.